# FASCICULE DE BREVET EUROPEEN

(11) **EP 0 985 565 B1**
(45) Date de publication et mention de la délivrance du brevet: **20.11.2002**
(21) Numéro de dépôt: 99402207.7
(22) Date de dépôt: 08.09.1999
(51) Int. Cl.: B60G 15/06, B62D 17/00

(54) **Dispositif de fixation supérieure d'un amortisseur de suspension d'une roue avant d'un véhicule automobile**
Obere Dämpferbefestigungsvorrichtung einer Kraftfahrzeugradaufhängung
Device for securing the upper mount of a front wheel suspension damper of a motor vehicle

(30) Priorité: 14.09.1998 FR 9811438
(43) Date de publication de la demande: 15.03.2000
(73) Titulaire: Peugeot Citroen Automobiles SA, 92200 Neuilly sur Seine (FR)
(72) Inventeur: Tiprez, Philippe, 91800 Brunoy (FR)
(74) Mandataire: Lanceplaine, Jean-Claude

(56) Documents cités:
- EP-A- 0 092 066
- EP-A- 0 265 059
- EP-A- 0 450 576
- WO-A-89/05242
- DE-A- 3 204 816
- DE-A- 3 619 942
- DE-A- 4 340 556
- FR-A- 2 759 752
- PATENT ABSTRACTS OF JAPAN vol. 013, no. 299 (M-847), 11 juillet 1989 (1989-07-11) & JP 01 090807 A (MAZDA MOTOR CORP), 7 avril 1989 (1989-04-07)
- PATENT ABSTRACTS OF JAPAN vol. 013, no. 489 (M-888), 7 novembre 1989 (1989-11-07) & JP 01 195106 A (MAZDA MOTOR CORP), 7 août 1989 (1989-08-07)

## Description

La présente invention a pour objet un dispositif de fixation supérieure d'un amortisseur de suspension d'une roue avant d'un véhicule automobile.

Les dispositifs de fixation supérieure d'un amortisseur de suspension avant comprennent généralement une coupelle supérieure de liaison avec la structure du véhicule et une coupelle inférieure disposée au-dessous de la coupelle supérieure et reliant la tige de l'amortisseur avec cette coupelle supérieure. Ces dispositifs comportent aussi une coupelle de limitation en détente disposée au-dessus de la coupelle supérieure et une coupelle de limitation en attaque disposée au-dessous de la coupelle inférieure.

Les coupelles supérieure et inférieure sont reliées entre elles par une masse en matériau élastomère et les différents éléments constituant le dispositif de fixation de l'amortisseur sont placés sur l'extrémité filetée de la tige de cet amortisseur et fixés sur celle-ci à l'aide d'un organe de vissage, comme par exemple un écrou.

Mais ces dispositifs de fixation présentent un encombrement radial important et ne permettent aucune modification de l'angle de chasse de la roue ou du plan transversal de cette roue si bien que pour un même type de véhicule il est nécessaire de prévoir différents dispositifs de fixation en fonction de l'utilisation de celui-ci.

L'invention a pour but d'éviter notamment ces inconvénients proposant un dispositif de fixation qui assure efficacement les différentes fonctions de limitation en attaque et en détente, de guidage précis du ressort de suspension et de filtrage découplé de la tige d'amortisseur, tout en étant compact et de montage simplifié.

L'invention a pour objet un dispositif de fixation supérieure d'un amortisseur de suspension d'une roue avant d'un véhicule automobile, du type comprenant sur la tige de l'amortisseur:
- une coupelle supérieure comportant une forme cylindrique,
- une coupelle inférieure disposée au-dessous de la coupelle supérieure et reliant la tige de l'amortisseur avec ladite coupelle supérieure,
- une coupelle de limitation en attaque disposée au-dessous de la coupelle inférieure,
- un organe de fixation desdites coupelles inférieure et de limitation sur la tige de l'amortisseur,
- des moyens de liaison de la tige de l'amortisseur et desdites coupelles avec une portion en saillie de la structure du véhicule, comprenant une coupelle de limitation en détente en appui sur ladite portion en saillie et un organe de fixation de ladite coupelle de limitation en détente sur la tige de l'amortisseur,
caractérisé en ce qu'il comporte des moyens de réglage de l'angle de chasse de la roue selon deux positions et/ou de réglage du plan transversal de ladite roue selon deux positions,
- les moyens de réglage étant formés par une bague par exemple en matière plastique interposée entre la coupelle supérieure et la portion en saillie de la structure du véhicule,
- la bague présentant un contour externe oblong et l'orifice de ladite bague présentant une section cylindrique dont le centre est excentré par rapport au centre défini par le contour externe.

Selon d'autres caractéristiques de l'invention :
- le centre de l'orifice est situé sur l'axe longitudinal de la bague,
- le centre de l'orifice est situé à l'intersection de deux axes, l'un s'étendant parallèlement à l'axe longitudinal de la bague et l'autre s'étendant parallèlement à l'axe transversal de ladite bague,
- la portion en saillie de la structure du véhicule présente une forme complémentaire au contour externe de la bague et un orifice axial de forme oblongue,
- la coupelle de limitation en détente présente un contour externe de forme complémentaire à la portion en saillie de la structure et un orifice de forme circulaire de passage de la tige de l'amortisseur et situé et dans l'axe de l'orifice de la bague,
- la coupelle de limitation en détente comporte, à sa périphérie un bord tombé et sur sa face interne une couche en matériau élastomère,
- la couche en matériau élastomère comporte au-dessous de la face plane de ladite coupelle, dans une zone située sur l'axe longitudinal de cette coupelle et la plus éloignée du centre de ladite coupelle, une portion de plus faible épaisseur,
- la portion de plus faible épaisseur est formée par des picots d'épaisseur croissante vers le bord de ladite coupelle.

Les caractéristiques et avantages de l'invention apparaîtront au cours de la description qui va suivre donnée à titre d'exemple et faite en référence aux dessins annexés, sur lesquels:
- la figure 1 est une vue en coupe axiale d'un dispositif de fixation conforme à l'invention,
- la figure 2 est une vue éclatée, en coupe axiale, des différents éléments composant le dispositif de fixation conforme à l'invention,
- la figure 3 est une vue schématique en coupe transversale selon la ligne 3.3 de la figure 1,
- la figure 4 est une vue en perspective d'un premier mode de réalisation des moyens de réglage du dispositif de fixation conforme à l'invention,
- la figure 5 est une vue en perspective d'une portion en saillie de la structure du véhicule servant d'appui au dispositif de fixation conforme à l'invention,
- la figure 6 est une vue en perspective d'une coupelle de limitation en détente du dispositif de fixation conforme à l'invention,
- les figures 7 et 8 sont des vues schématiques en coupe transversale montrant les différentes possibilités de réglage⁻ du premier mode de réalisation des moyens de réglage du dispositif de fixation conforme à l'invention,
- la figure 9 est une vue en perspective d'un second mode de réalisation des moyens de réglage du dispositif de fixation conforme à l'invention,
- la figure 10 est une vue schématique en coupe transversale montrant les différentes possibilités de réglage du dispositif de fixation avec le second mode de réalisation des moyens de réglage,
- la figure 11 est une vue en coupe axiale d'une variante de la coupelle de limitation en détente du dispositif de fixation conforme à l'invention.

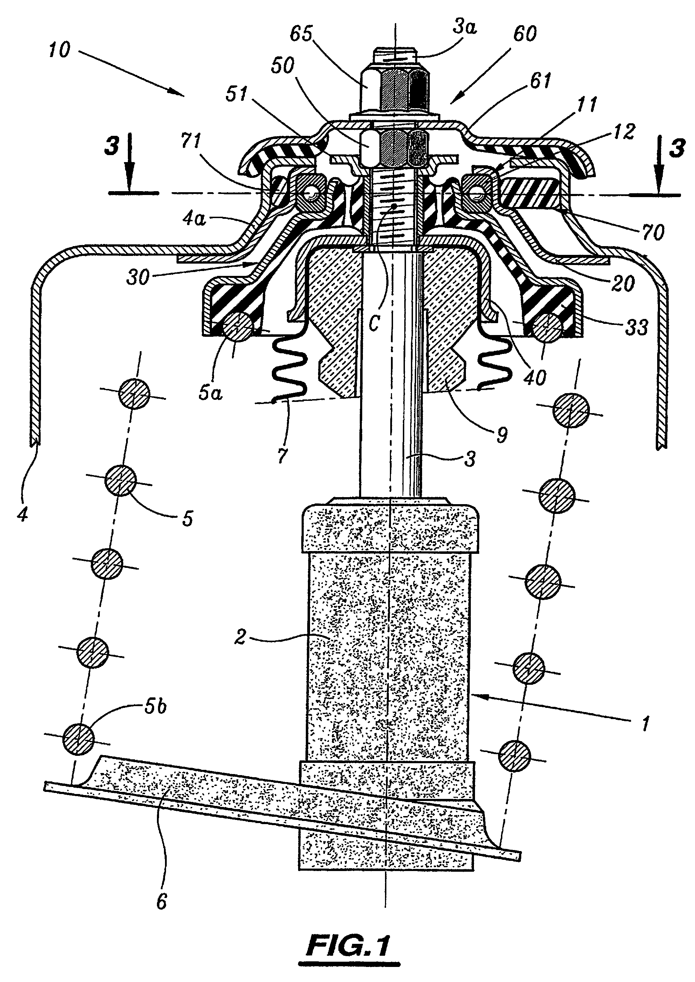

Sur la figure 1, on a représenté schématiquement la partie supérieure d'un amortisseur 1 de suspension avant d'un véhicule automobile et qui se compose d'un corps 2 et d'une tige d'amortisseur 3 déplaçable en translation à l'intérieur de ce corps 2.

De manière classique, l'amortisseur 1 est relié, par son extrémité inférieure, à la roue du véhicule par une rotule, non représentée, et l'extrémité supérieure de cet amortisseur 1 est reliée à la structure 4 du véhicule par un dispositif de fixation conforme à l'invention et désigné dans son ensemble par la référence 10.

L'amortisseur 1 comporte également un ressort - d'amortisseur 5 dont la spire supérieure 5a est en butée sur le dispositif de fixation 10, comme on le verra ultérieurement, et la spire inférieure 5b est en appui sur une coupelle 6 solidaire du corps de l'amortisseur 1.

La tige 3 de l'amortisseur 1 est protégée par un soufflet 7.

En se reportant maintenant plus particulièrement aux figures 1 à 3, on va décrire le dispositif de fixation 10.

D'une manière générale, ce dispositif de fixation 10 comprend:
- une coupelle supérieure 20 de forme cylindrique,
- une coupelle inférieure 30 disposée au-dessous de la coupelle supérieure 20 et reliant la tige 3 de l'amortisseur avec cette coupelle supérieure 20,
- une coupelle 40 de limitation en attaque disposée au-dessous de la coupelle inférieure 30,
- un organe 50 de fixation de ces coupelles sur la tige 3 de l'amortisseur,
- et des moyens 60 de liaison de la tige 3 de l'amortisseur et desdites coupelles avec une portion 4a en saillie de la structure 4 du véhicule automobile.

Ainsi que représenté à la figure 1, l'extrémité de la tige 3 de l'amortisseur 1 comporte une partie filetée 3a.

Les coupelles supérieure 20 et inférieure 30 forment entre elles un logement annulaire (11) pour une butée à billes 12.

La coupelle supérieure 20 de forme générale cylindrique est munie, en son centre, d'un orifice axial 21 et comporte, de bas en haut, une portion horizontale 22, une portion 23 inclinée en direction de l'axe de la coupelle supérieure 20, une portion horizontale 24, une portion verticale 25 et une portion horizontale 26.

La face externe de la coupelle supérieure 20 est recouverte d'une pellicule 27 de caoutchouc adhérisé sur ladite coupelle et la face externe des portions 22, 23 et 26 forme des surfaces de contact avec la face interne de la portion en saillie 4a de la structure 4 du véhicule automobile.

Par ailleurs, la face interne des portions 25 et 26 est destinée à servir de surface d'appui à la butée à billes 12.

La coupelle inférieure 30 comporte, d'une part, une armature intérieure tubulaire 31 en acier et une armature extérieure 32 en acier ou en aluminium ou en alliage d'aluminium coulé sous pression.

Les armatures intérieure 31 et extérieure 32 sont reliées entre elles par une masse 33 en matériau élastomère qui⁻ recouvre également la face intérieure de l'armature extérieure 32.

La masse 33 en matériau élastomère est surmoulée entre les armatures 31 et 32 et sert au filtrage en partie centrale de l'amortisseur 1 et en partie basse à la tenue et au filtrage de la spire 5a du ressort 5.

A cet effet, la masse 33 en matériau élastomère comporte, à sa partie inférieure, une surface d'appui de la spire supérieure 5a du ressort 5 et qui est formée par une gorge annulaire 34 ménagée dans ladite masse 33 en matériau élastomère.

L'armature extérieure 32 comporte, en partie haute, une portion horizontale 35 prolongée par une portion verticale 36 concentrique à l'armature intérieure 31.

Lorsque les coupelles 20 et 30 sont placées concentriquement l'une par rapport à l'autre, les portions 25 et 26 de la coupelle supérieure 20 et les portions 35 et 36 de l'armature extérieure 30 déterminent le logement annulaire 1 pour la butée à billes 12, comme représenté à la figure 1.

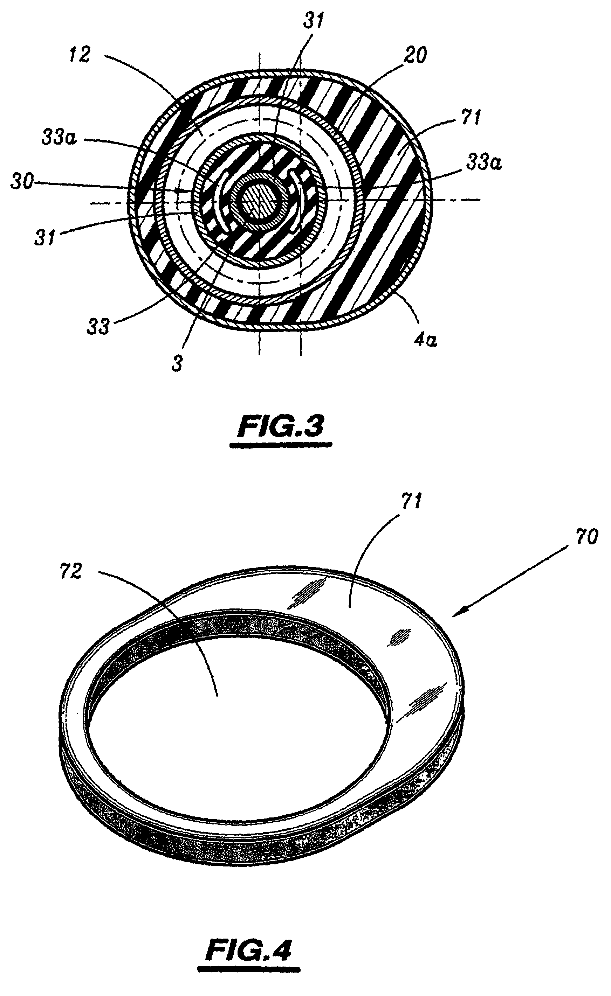

Ainsi que représenté plus particulièrement à la figure 3, la masse 33 en matériau élastomère comporte, entre la portion verticale 36 de l'armature extérieure 32 et l'armature intérieure tubulaire 31, deux alvéoles opposées 33a - s'étendant perpendiculairement à l'axe longitudinal du véhicule.

Ces alvéoles 33a permettent de différencier les raideurs longitudinales et transversales et de ce fait d'améliorer le confort.

L'armature intérieure 31 comporte, à son extrémité inférieure, une partie décolletée 31a ayant une hauteur légèrement supérieure à l'épaisseur de la coupelle 40 de limitation en attaque.

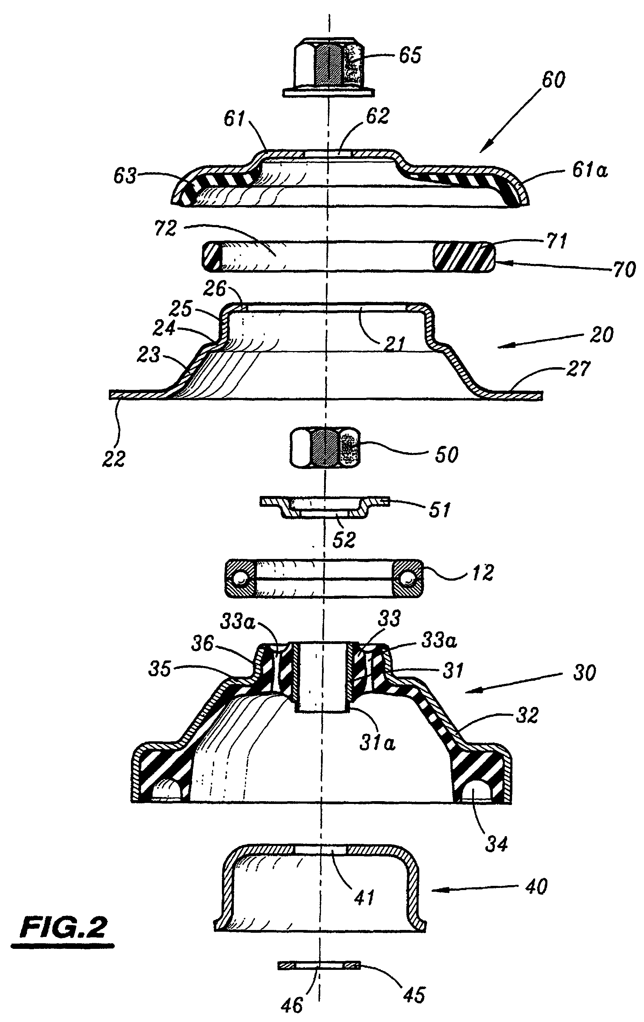

Cette coupelle 40 de limitation en attaque a, comme représenté à la figure 2, la forme d'un bol inversé et est destinée à contenir la partie supérieure du soufflet de protection 7 et à limiter l'expansion d'une butée en attaque 9 emmanchée sur la tige 3 de l'amortisseur 1, comme représenté à la figure 1.

Ainsi, la coupelle 40 sert à limiter l'attaque lorsque sa face supérieure entre en contact avec la masse 33 en matériau élastomère.

La coupelle 40 est percée, en son centre, d'un orifice 41 dont le diamètre correspond au diamètre de la partie décolletée 31a de l'armature intérieure 31.

La rondelle d'appui 45 réalisée en acier traité possède en son centre un orifice 46 de diamètre correspondant au diamètre de l'extrémité de la tige 3 de l'amortisseur 1.

Les moyens 60 de liaison de la tige 3 de l'amortisseur 1 et des coupelles 20, 30 et 40 avec la portion en saillie 4a de la structure 4 du véhicule comprennent une coupelle 61 de limitation en détente en appui sur ladite portion en saillie 4a et un organe 65 de fixation de ladite coupelle 61 de limitation en détente sur la tige 3 de l'amortisseur 1.

L'organe de fixation 65 est constitué par exemple par un écrou vissé sur l'extrémité filetée 3a de la tige 3 de l'amortisseur 1.

Le dispositif de fixation 10 comprend également des moyens désignés par la référence générale 70 de réglage de l'angle de chasse de la roue et/ou de réglage du plan transversal de ladite roue.

Le réglage de l'angle de chasse de la roue est défini par le déplacement du point C sur un axe s'étendant parallèlement à l'axe longitudinal du véhicule et le réglage du plan transversal de cette roue est défini par déplacement dudit point C sur un axe s'étendant parallèlement à l'axe transversal de ce véhicule.

Ces moyens 70 de réglage sont formés par une bague 71, par exemple en matière plastique, interposée entre la coupelle supérieure.20 et la portion en saillie 4a de la structure 4 du véhicule.

- Selon un premier mode de réalisation représenté à la figure 4, la bague 71 présente un contour externe oblong et l'orifice 72 de cette bague 71 dessiné au passage de la portion cylindrique 25 de la coupelle supérieure 20 présente une section cylindrique dont le centre est excentré par rapport au centre défini par le contour externe de ladite bague 71.

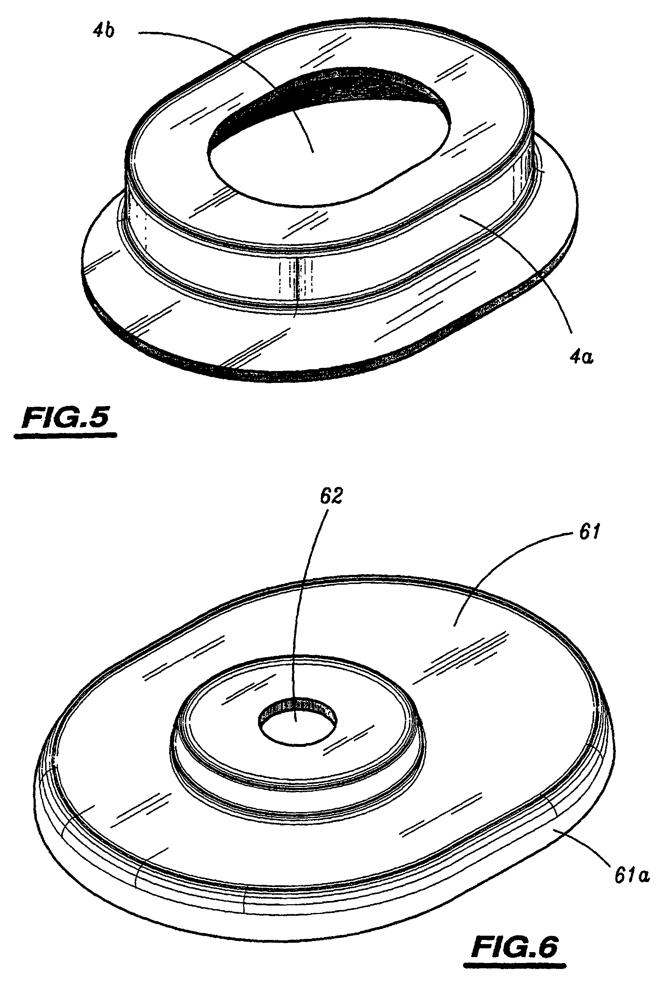

La portion en saillie 4a de la structure 4 du véhicule présente une forme complémentaire au contour externe de la bague 71, c'est à dire une forme oblongue, ainsi que représenté à la figure 5. Cette portion en saillie 4a est percée d'un orifice axial 4b également de forme oblongue.

Le dispositif 10 de fixation comporte également une rondelle 51 de sécurité de détente munie d'un orifice central 52 de passage de la tige 3 de l'amortisseur 1.

Comme représenté à la figure 6, la coupelle 61 de limitation en détente présente un contour externe de forme complémentaire à la portion en saillie 4a, c'est à dire un contour externe de forme oblongue et comporte un orifice 62 de forme circulaire destiné au passage de la tige 3 de l'amortisseur 1 et situé dans l'axe de l'orifice 72 de la bague 71. Cette coupelle 61 comporte, à sa périphérie, un bord tombé 61a et sur sa face interne une couche 63 en matériau élastomère qui forme une surface d'appui sur le bord supérieur de la portion en saillie 4a.

Selon le mode de réalisation représenté sur les figures 4 à 7, l'axe longitudinal X-X de la bague de réglage 71, de la coupelle 61 de limitation en détente ainsi que de la portion en saillie 4a s'étend parallèlement à l'axe longitudinal du véhicule.

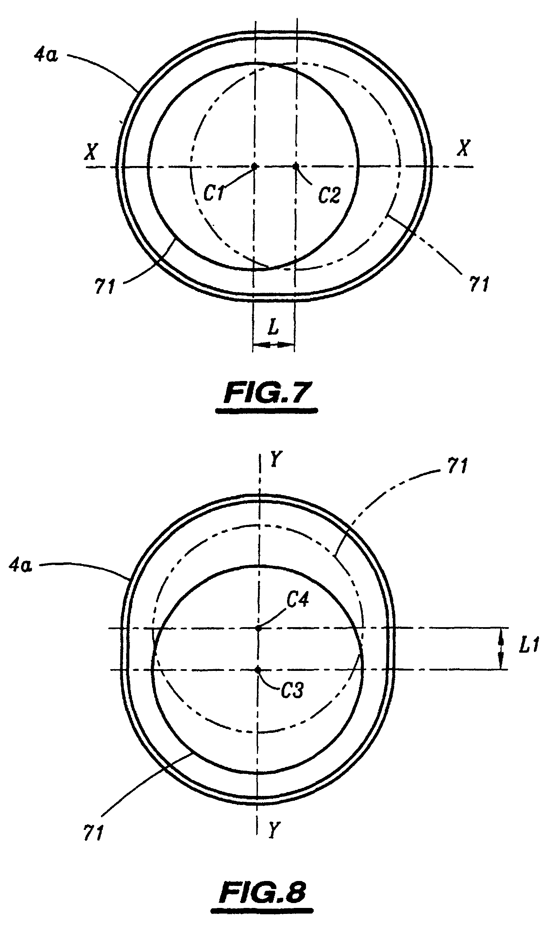

Sur la figure 7, on a représenté schématiquement le contour interne de la portion en saillie 4a et, à l'intérieur de cette portion fixe, les deux positions possibles de la bague de réglage 71, une première position en traits pleins dans laquelle la partie la plus large de cette bague 71 est située vers l'arrière du véhicule et une seconde position en traits mixtes dans laquelle ladite partie la plus large de la bague 71 est située vers l'avant du véhicule.

La première position en traits pleins détermine un premier point C1 définissant un premier angle de chasse de la roue et la seconde position en traits mixtes détermine un second point C2 définissant un second angle de chasse de cette roue, l'écart L entre les points C1 et C2 étant réalisé par la modification de la position de la bague de réglage 71.

Ainsi, le fait de mettre le maximum de matière de la bague 71 d'un côté ou de l'autre permet de caler la coupelle 20 et de ce fait l'axe de l'amortisseur 1 sur deux axes permettant d'obtenir deux angles de chasse différents avec une seule position du plan transversal de la roue.

Sur la figure 8, on a représenté une variante dans laquelle la bague 71 qui est identique à celle du précédent mode de réalisation, permet de régler le plan transversal de la roue selon deux positions.

Sur cette figure, on a représenté schématiquement le contour interne de la portion en saillie (4a) dont l'axe longitudinal Y-Y s'étend perpendiculairement à l'axe longitudinal du véhicule. On a également représenté, à l'intérieur de la portion en saillie 4a, deux positions possibles de la bague de réglage 71, une première position en - traits pleins dans laquelle la partie la plus large de la bague 71 est située par exemple vers l'extérieur du véhicule et une seconde position en traits mixtes dans laquelle la partie la plus large de ladite bague 71 est située vers l'intérieur du véhicule.

La première position en traits pleins détermine un premier point C3 définissant un premier réglage du plan transversal de la roue et la seconde position en traits mixtes détermine un second point C4 définissant un second réglage du plan transversal de ladite roue, l'écart L1 entre les points C3 et C4 étant obtenu par les deux positions de la bague de réglage 71.

Ainsi, le fait de mettre le maximum de matière de cette bague de réglage 71 à droite ou à gauche permet de caler la coupelle supérieure 20 et l'axe de l'amortisseur 1 sur deux points C3 ou C4 et par conséquent de définir deux positions de réglage du plan transversal de la roue.

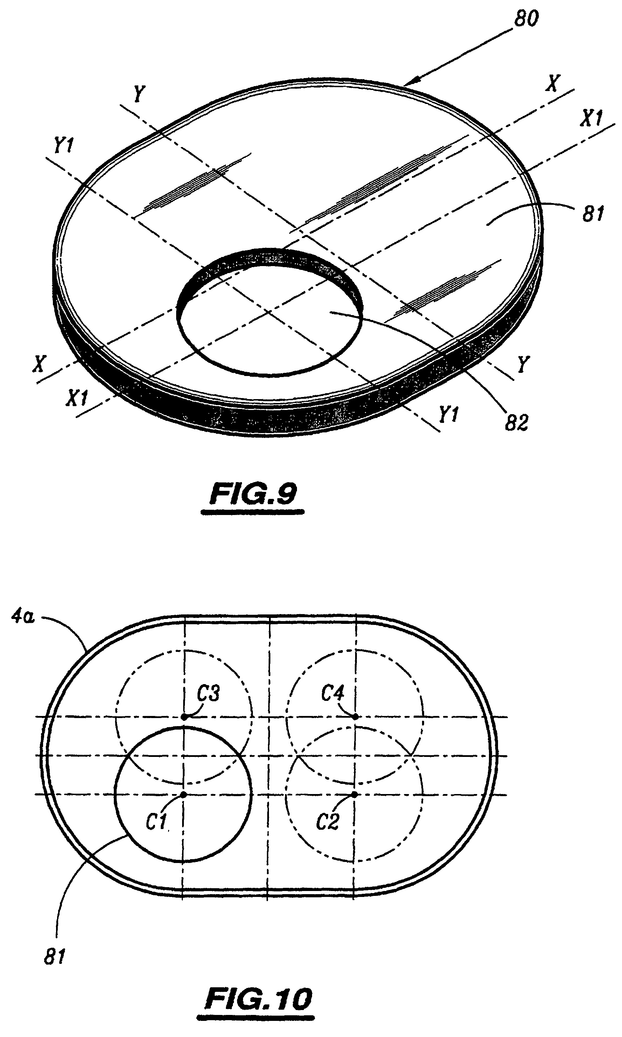

Sur les figures 9 et 10, on a représenté un autre mode de réalisation dans lequel le dispositif de fixation 10 comporte des moyens 80 de réglage de l'angle de chasse de la roue selon deux positions et du plan transversal de ladite roue également selon deux positions.

Ces moyens 80 de réglage sont formés par une bague 81, par exemple en matière plastique, qui présenté un contour externe oblong et dont l'orifice 82 présente une section cylindrique. Le centre de cet orifice est également excentré par rapport au centre défini par le contour externe de la bague 81.

Dans ce mode de réalisation, le centre de l'orifice 82 est situé à l'intersection de deux axes respectivement X1-X1 et Y1-Y1 , l'un X1-X1 s'étendant parallèlement à l'axe longitudinal X-X de la bague 81 et l'autre X1-X1 s'étendant parallèlement à l'axe transversal y-y de ladite bague 81.

Sur la figure 10, on a représenté schématiquement le contour interne de la portion en saillie 4a dont l'axe longitudinal s'étend parallèlement à l'axe longitudinal du véhicule.

Sur cette figure, on a représenté également les quatre positions possibles de la bague de réglage 81 à l'intérieur de ladite portion en saillie 4a.

La première position détermine un premier point C1 définissant un premier angle de chasse de la roue et un premier réglage du plan transversal de cette roue et la seconde position de la bague 81 détermine un second point C2 définissant un second angle de chasse de la roue avec la première position de réglage du plan transversal de ladite roue qui est identique à la première position définie par le point C1.

- La troisième position de la bague 81 détermine un troisième point C3 définissant le premier angle de chasse de la roue identique à l'angle de chasse déterminé par le premier point C1 et une seconde position de réglage du plan transversal de ladite roue.

La quatrième position de la bague de réglage (81) détermine un quatrième point C4 définissant le second angle de chasse de la roue identique à celui défini par le point C2 avec une seconde position de réglage du plan transversal de ladite roue qui est identique à la seconde position définie par le point C3.

Ainsi, en changeant la position de la bague de réglage 81 à l'intérieur de la portion en saillie 4a de forme oblongue, on détermine avec une seule bague quatre possibilités de réglage de la roue en modifiant la position de l'axe de l'amortisseur (1), c'est à dire deux angles de chasse de la roue et deux positions de réglage du plan transversal de cette roue.

La forme oblongue de la coupelle 61 avec son bord tombé 61a permet une orientation automatique de cette coupelle 61 sur la portion en saillie 4a de la structure du véhicule. La couche 63 en matériau élastomère permet les débattements radiaux coniques et axiaux sans parasiter le filtrage de la coupelle inférieure 30.

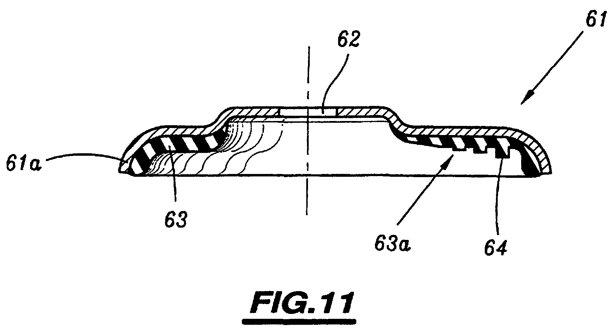

Lors des débattements coniques de l'amortisseur 1 et pour éviter que la butée entre la coupelle 61 de limitation en détente et la portion en saillie 4a se fasse plus rapidement au niveau du point le plus excentré de ladite coupelle 61, la couche 63 en matériau élastomère comporte au-dessous de la face plane de ladite coupelle 61 dans la zone située sur l'axe longitudinal de la coupelle 61 et la plus éloignée du centre de cette coupelle 61, une portion 63a de plus faible épaisseur, comme représentée à la figure 11.

Selon un mode de réalisation représenté sur cette figure, la portion 63 de plus faible épaisseur est formée par des picots 64 d'épaisseur croissante vers le bord 61a de la coupelle 61 et qui permettent de maintenir un contact vertical, tout en possédant une rigidité verticale faible.

Le montage des différents éléments composant le dispositif de fixation 10 est réalisé de la façon suivante.

Tout d'abord, la rondelle 45, la coupelle 40 de limitation en attaque et la coupelle inférieure (30) sont placées sur l'extrémité 3a de la tige 3 de l'amortisseur 1.

La coupelle inférieure 30 est placée de telle manière que la spire supérieure 5a du ressort 5 soit positionnée dans la gorge 34 et les alvéoles 33a ménagées dans la masse 33 en matériau élastomère soient orientées perpendiculairement à l'axe longitudinal du véhicule automobile.

La butée à billes 12 est emmanchée sur la portion verticale cylindrique 36 de l'armature extérieure 32 de la coupelle 30, la face inférieure de ladite butée à bille 12 venant en appui sur la portion horizontale 35 de cette armature extérieure 32.

La rondelle 51 de sécurité de détente est ensuite placée sur l'extrémité 3a de la tige 33 et l'organe de fixation 50 formé par un écrou est vissé sur cette extrémité filetée 3a de la tige 3 de l'amortisseur 1.

Ensuite, la coupelle supérieure 20 est placée sur la butée à billes 12 et la bague de réglage 71 ou 81 - est emmanchée sur la portion cylindrique verticale 25 de ladite coupelle supérieure 20.

L'ensemble ainsi formé avec l'amortisseur 1 est monté dans la portion en saillie 4a de la structure 4 du véhicule et la coupelle 61 de limitation en détente est placée sur l'extrémité 3a de la tige 3 de l'amortisseur.

L'ensemble est solidarisé de la structure du véhicule uniquement par l'organe de fixation 65 constitué par un écrou qui est vissé sur l'extrémité filetée 3a de la tige 3 de l'amortisseur 1.

Ce type de montage permet de monter l'ensemble du dispositif de fixation avec l'amortisseur sans avoir de pièce rapportée sur la structure du véhicule automobile.

Le dispositif de fixation selon l'invention offre la possibilité de pouvoir choisir entre différents réglages de l'angle de chasse et/ou du plan transversal de la roue ce qui permet de pouvoir adapter ce dispositif de fixation pour plusieurs types de réglage en fonction de l'utilisation du véhicule.

Ce dispositif de fixation permet de simplifier le montage et remplit toutes les fonctions qui sont la limitation en attaque, la limitation en détente, le guidage précis du ressort de suspension grâce à une grande raideur radiale et un filtrage découplé de la tige de l'amortisseur.

## Revendications

1. Dispositif de fixation supérieure d'un amortisseur (1) de suspension d'une roue avant d'un véhicule automobile, du type comprenant, sur la tige (3) de l'amortisseur (1) :
- une coupelle supérieure (20) comportant une forme cylindrique,
- une coupelle inférieure (30) disposée au-dessous de la coupelle supérieure (20) et reliant à la tige de l'amortisseur (3) à ladite coupelle supérieure (20),
- une coupelle (40) de limitation en attaque disposée au-dessous de la coupelle inférieure (30),
- un organe (50) de fixation desdites coupelles inférieure et de limitation sur la tige (3) de l'amortisseur (1),
- des moyens (60) de liaison de la tige (3) de l'amortisseur (1) et desdites coupelles avec une portion en saillie (4a) de la structure (4) du véhicule, comprenant une coupelle (61) de limitation en détente en appui sur ladite portion en saillie (4a) et un organe (65) de fixation de ladite coupelle (61) de limitation en détente sur la tige (3) de l'amortisseur (1),
**caractérisé en ce qu'**il comporte des moyens (70;80) de réglage de l'angle de chasse de la roue selon deux positions ou de réglage du plan transversal de ladite roue selon deux positions,
ces moyens (70; 80) de réglage étant formés par une bague (71;81), par exemple en matière plastique, interposée entre la coupelle supérieure (20) et la portion en saillie (4a) de la structure (4) du véhicule,
cette bague (71;81) présentant un contour externe oblong et l'orifice (72;82) de ladite bague (71;81) présentant une section cylindrique dont le centre est excentré par rapport au centre défini par le contour externe de ladite bague.

2. Dispositif de fixation supérieure d'un amortisseur (1) de suspension d'une roue avant d'un véhicule automobile, du type comprenant, sur la tige (3) de l'amortisseur (1) :
- une coupelle supérieure (20) comportant une forme cylindrique,
- une coupelle inférieure (30) disposée au-dessous de la coupelle supérieure (20) et reliant à la tige (3) de l'amortisseur (1) avec ladite coupelle supérieure (20),
- une coupelle (40) de limitation en attaque disposée au-dessous de la coupelle inférieure (30),
- un organe (50) de fixation desdites coupelles inférieure et de limitation sur la tige (3) de l'amortisseur (1),
- des moyens (60) de liaison de la tige (3) de l'amortisseur (1) et desdites coupelles avec une portion en saillie (4a) de la structure (4) du véhicule, comprenant une coupelle (60) de limitation en détente en appui sur ladite portion en saillie (4a) et un organe (65) de fixation de ladite coupelle (61) de limitation en détente sur la tige (3) de l'amortisseur (1),
**caractérisé en ce qu'**il comporte des moyens (80) de réglage de l'angle de chasse de la roue selon deux positions et du plan transversal de ladite roue selon deux positions,
ces moyens (70; 80) de réglage étant formés par une bague (71;81), par exemple en matière plastique, interposée entre la coupelle supérieure (20) et la portion en saillie (4a) de la structure (4) du véhicule,
cette bague (71;81) présentant un contour externe oblong et l'orifice (72;82) de ladite bague (71;81) présentant une section cylindrique dont le centre est excentré par rapport au centre défini par le contour externe de ladite bague.

3. Dispositif selon les revendications 1 ou 2, **caractérisé en ce que** le centre de l'orifice (72) de la bague (71) est situé sur l'axe longitudinal de ladite bague (71).

4. Dispositif selon les revendications 1 ou 2, **caractérisé en ce que** le centre de l'orifice (82) de la bague (81) est situé à l'intersection de deux axes, l'un s'étendant parallèlement à l'axe longitudinal de la bague (81) et l'autre s'étendant parallèlement à l'axe transversal de ladite bague (81).

5. Dispositif selon l'une quelconque des revendications 1 ou 2, **caractérisé en ce que** la portion en saillie (4a) de la structure (4) du véhicule présente une forme complémentaire au contour externe de la bague (71;81) et un orifice axial (4b) de forme oblongue.

6. Dispositif selon l'une quelconque des revendications 1, 2 ou 5 **caractérisé en ce que** la coupelle (61) de limitation en détente présente un contour externe de forme complémentaire à la portion en saillie (4a) de la structure (4) et un orifice (62) de forme circulaire, de passage de la tige (3) de l'amortisseur (1) et situé dans l'axe de l'orifice (72;82) de la bague (71;81).

7. Dispositif selon la revendication 6, **caractérisé en ce que** la coupelle (61) de limitation en détente comporte à sa périphérie un bord tombé (61a) et sur sa face interne une couche (63) en matériau élastomère.

8. Dispositif selon la revendication 7, **caractérisé en ce que** la couche (63) en matériau élastomère comporte, au-dessous de la surface plane de ladite coupelle (61), dans une zone située sur l'axe longitudinal de la coupelle (61) et la plus éloignée du centre de cette coupelle (61), une portion (63a) de plus faible épaisseur.

9. Dispositif selon la revendication 8, **caractérisé en ce que** la portion (63a) de plus faible épaisseur est formée par des picots (64) d'épaisseur croissante vers le bord de ladite coupelle (61).

## Patentansprüche

1. Vorrichtung für die obere Befestigung eines Aufhängungsdämpfers (1) eines Kraftfahrzeug-Vorderrades, wobei die Vorrichtung von dem Typ ist, der an der Stange (3) des Dämpfers (1) umfaßt:
- eine obere Schale (20), die eine zylindrische Form aufweist,
- eine untere Schale (30), die unter der oberen Schale (20) angeordnet ist und die Stange (3) des Dämpfers mit der oberen Schale (20) verbindet,
- eine Einfederungsbegrenzungsschale (40), die unter der unteren Schale (30) angeordnet ist,
- ein Organ (50) für die Befestigung der unteren Schale und der Begrenzungsschale am Stift (3) des Dämpfers (1),
- Mittel (60) für die Verbindung der Stange (3) des Dämpfers (1) und der Schalen mit einem vorstehenden Abschnitt (4a) der Fahrzeugstruktur, die eine Rückfederungsbegrenzungsschale (61), die sich am vorstehenden Abschnitt (4a) abstützt, und ein Organ (65) für die Befestigung der Rückfederungsbegrenzungsschale (61) an der Stange (3) des Dämpfers (1) umfassen,
**dadurch gekennzeichnet, daß** sie Mittel (70, 80) für die Einstellung des Nachlaufwinkels des Rades in zwei Positionen oder für die Einstellung der transversalen Ebene des Rades in zwei Positionen umfaßt,
wobei diese Einstellmittel (70; 80) aus einem Ring (71; 81), beispielsweise aus Kunststoff, gebildet sind, der zwischen die obere Schale (20) und den vorstehenden Abschnitt (4a) der Fahrzeugstruktur (4) eingesetzt ist,
wobei dieser Ring (71-81) eine längliche äußere Kontur aufweist und die Öffnung (72-82) des Rings (71-81) einen zylindrischen Abschnitt aufweist, dessen Zentrum in bezug auf das durch die äußere Kontur des Rings definierte Zentrum exzentrisch ist.

2. Vorrichtung für die obere Befestigung eines Aufhängungsdämpfers (1) eines Kraftfahrzeug-Vorderrades, wobei die Vorrichtung von dem Typ ist, der an der Stange (3) des Dämpfers (1) umfaßt:
- eine obere Schale (20), die eine zylindrische Form aufweist,
- eine untere Schale (30), die unter der oberen Schale (20) angeordnet ist und die Stange (3) des Dämpfers (1) mit der oberen Schale (20) verbindet,
- eine Einfederungsbegrenzungsschale (40), die unter der unteren Schale (30) angeordnet ist,
- ein Organ (50) für die Befestigung der unteren Schale und der Begrenzungsschale an der Stange (3) des Dämpfers (1),
- Mittel (60) für die Verbindung der Stange (3) des Dämpfers (1) und der Schalen mit einem vorstehenden Abschnitt (4a) der Fahrzeugstruktur (4), die eine Rückfederungsbegrenzungsschale (60), die sich an dem vorstehenden Abschnitt (4a) abstützt, und ein Organ (65) für die Befestigung der Rückfederungsbegrenzungsschale (61) an der Stange (3) des Dämpfers (1) umfassen,
**dadurch gekennzeichnet, daß** sie Mittel (80) für die Einstellung des Nachlaufwinkels des Rades in zwei Positionen und der transversalen Ebene des Rades in zwei Positionen umfaßt,
wobei diese Einstellmittel (70; 80) durch einen Ring (71; 81), beispielsweise aus Kunststoff, gebildet sind, der zwischen die obere Schale (20) und den vorstehenden Abschnitt (4a) der Fahrzeugstruktur eingesetzt ist,
wobei dieser Ring (71; 81) eine längliche äußere Kontur aufweist und die Öffnung (72; 82) des Rings (71; 81) einen zylindrischen Abschnitt aufweist, dessen Zentrum in bezug auf das durch die äußere Kontur des Rings definierte Zentrum exzentrisch ist.

3. Vorrichtung nach den Ansprüchen 1 oder 2, **dadurch gekennzeichnet, daß** sich das Zentrum der Öffnung (72) des Rings (71) auf der Längsachse des Rings (71) befindet.

4. Vorrichtung nach den Ansprüchen 1 oder 2, **dadurch gekennzeichnet, daß** sich das Zentrum der Öffnung (82) des Rings (81) bei dem Schnittpunkt zweier Achsen befindet, wovon sich eine parallel zur Längsachse des Rings (81) erstreckt und die andere sich parallel zur Querachse des Rings (81) erstreckt.

5. Vorrichtung nach einem der Ansprüche 1 oder 2, **dadurch gekennzeichnet, daß** der vorstehende Abschnitt (4a) der Fahrzeugstruktur (4) eine zur äußeren Kontur des Rings (71; 81) komplementäre Form und eine axiale Öffnung (4b) mit länglicher Form aufweist.

6. Vorrichtung nach einem der Ansprüche 1, 2 oder 5, **dadurch gekennzeichnet, daß** die Rückfederungsbegrenzungsschale (81) eine äußere Kontur mit einer zum vorstehenden Abschnitt (4a) der Struktur (4) komplementären Form sowie eine Öffnung (62) mit Kreisform für den Durchgang der Stange (3) des Dämpfers (1), die sich auf der Achse der Öffnung (72; 82) des Rings (71; 81) befindet, aufweist.

7. Vorrichtung nach Anspruch 6, **dadurch gekennzeichnet, daß** die Rückfederungsbegrenzungsschale (61) an ihrem Umfang eine abfallende Kante (61a) und auf ihrer Innenfläche eine Schicht (83) aus Elastomermaterial umfaßt.

8. Vorrichtung nach Anspruch 7, **dadurch gekennzeichnet, daß** die Schicht (63) aus Elastomermaterial unter der ebenen Oberfläche der Schale (61) in einer Zone, die sich auf der Längsachse der Schale (61) und am weitesten entfernt vom Zentrum dieser Schale (61) befindet, einen Abschnitt (63a) mit geringerer Dicke aufweist.

9. Vorrichtung nach Anspruch 8, **dadurch gekennzeichnet, daß** der Abschnitt (63a) mit geringerer Dicke durch Spitzen (64), deren Dicke zum Rand der Schale (61) zunimmt, gebildet ist.

## Claims

1. Device for securing the upper mount of a front wheel suspension damper (1) of a motor vehicle, of the type comprising, on the rod (3) of the damper (1):
- an upper plate (20) comprising a cylindrical shape,
- a lower plate (30) which is disposed below the upper plate (20) and connecting to the rod of the damper (3) with said upper plate (20),
- a plate (40) for limitation of engagement which is disposed below the lower plate (30),
- a member (50) for securing said lower plate and plate for limitation on the rod (3) of the damper (1),
- means (60) for connection of the rod (3) of the damper (1) and of said plates with a projecting portion (4a) of the structure (4) of the vehicle, comprising a plate (61) for limitation of backspring which abuts on said projecting portion (4a) and a member (65) for securing said plate (61) for limitation of backspring on the rod (3) of the damper (1),
**characterised in that** it comprises means (70; 80) for control of the steering error angle of the wheel according to two positions or for control of the transverse plane of said wheel according to two positions, these control means (70; 80) being formed by a ring (71; 81), for example made of plastic material, which is interposed between the upper plate (20) and the projecting portion (4a) of the structure (4) of the vehicle, this ring (71; 81) presenting an oblong, external contour and the orifice (72; 82) of said ring (71; 81) presenting a cylindrical section, the centre of which is off-centre with respect to the centre defined by the external contour of said ring.

2. Device for securing the upper mount of a front wheel suspension damper (1) of a motor vehicle, of the type comprising, on the rod (3) of the damper (1):
- an upper plate (20) comprising a cylindrical shape,
- a lower plate (30) which is disposed below the upper plate (20) and connecting to the rod (3) of the damper (1) with said upper plate (20),
- a plate (40) for limitation of engagement which is disposed below the lower plate (30),
- a member (50) for securing said lower plate and plate for limitation on the rod (3) of the damper (1),
- means (60) for connection of the rod (3) of the damper (1) and of said plates with a projecting portion (4a) of the structure (4) of the vehicle, comprising a plate (60) for limitation of backspring which abuts on said projecting portion (4a) and a member (65) for securing said plate (61) for limitation of backspring on the rod (3) of the damper (1),
**characterised in that** it comprises means (80) for control of the steering error angle of the wheel according to two positions and of the transverse plane of said wheel according to two positions, these control means (70; 80) being formed by a ring (71; 81), for example made of plastic material, which is interposed between the upper plate (20) and the projecting portion (4a) of the structure (4) of the vehicle, this ring (71; 81) presenting an oblong, external contour and the orifice (72; 82) of said ring (71; 81) presenting a cylindrical section, the centre of which is off-centre with respect to the centre defined by the external contour of said ring.

3. Device according to claims 1 or 2, **characterised in that** the centre of the orifice (72) of the ring (71) is situated on the longitudinal axis of said ring (71).

4. Device according to claims 1 or 2, **characterised in that** the centre of the orifice (82) of the ring (81) is situated at the intersection of two axes, the one extending parallel to the longitudinal axis of the ring (81) and the other extending parallel to the transverse axis of said ring (81).

5. Device according to any of the claims 1 or 2, **characterised in that** the projecting portion (4a) of the structure (4) of the vehicle presents a form which is complementary to the external contour of the ring (71; 81) and an axial orifice (4b) of an oblong form.

6. Device according to any of the claims 1, 2 or 5, **characterised in that** the plate (61) for limitation of backspring presents an external contour of a form which is complementary to the projecting portion (4a) of the structure (4) and an orifice (62) of a circular form, for passage of the rod (3) of the damper (1) and situated in the axis of the orifice (72; 82) of the ring (71; 81).

7. Device according to claim 6, **characterised in that** the plate (61) for limitation of backspring comprises at its periphery a cut-off edge (61a) and, on its internal face, a layer (63) made of elastomer material.

8. Device according to claim 7, **characterised in that** the layer (63) made of elastomer material comprises, below the plane surface of said plate (61), in a zone which is situated on the longitudinal axis of the plate (61) and the most distant from the centre of this plate (61), a portion (63a) of a lesser thickness.

9. Device according to claim 8, **characterised in that** the portion (63a) of lesser thickness is formed by peaks (64) of a thickness which increases towards the edge of said plate (61),
